# EUROPEAN PATENT APPLICATION

(11) **EP 4 618 493 A1**
(43) Date of publication of application: **17.09.2025**
(21) Application number: 23895996.9
(22) Date of filing: 29.06.2023
(51) Int. Cl.: H04L 41/0663

(54) **NODE ABNORMALITY EVENT PROCESSING METHOD, NETWORK INTERFACE CARD, AND STORAGE CLUSTER**

(30) Priority: 29.11.2022 CN 202211509370; 29.01.2023 CN 202310144857
(71) Applicant: Huawei Technologies Co., Ltd., Shenzhen, Guangdong 518129 (CN)
(72) Inventor: YANG, Juntao, Shenzhen, Guangdong 518129 (CN); KUANG, Zhuqing, Shenzhen, Guangdong 518129 (CN); ZHAO, Yang, Shenzhen, Guangdong 518129 (CN); LI, Ruozhu, Shenzhen, Guangdong 518129 (CN)
(74) Representative: Grünecker Patent- und Rechtsanwälte PartG mbB
(86) International application number: PCT/CN2023/103864
(87) International publication number: WO 2024/113832

(57) **Abstract**

A node anomaly event processing method, a network interface card, and a storage cluster are disclosed, and pertain to the field of storage technologies. The method is applied to a network interface card in a storage device. The storage device further includes a plurality of nodes configured to manage a storage. The network interface card is communicatively connected to a first node in the plurality of nodes. When detecting an anomaly event related to the first node, the network interface card can actively send a notification message to a host, to notify the host that an anomaly occurs on a path on which the first node is located, so that the host performs path switching. This manner can effectively reduce a path switching delay of the host, and improve continuity and reliability of a storage service.

## Description

This application claims priorities to Chinese Patent Application No. 202211509370.9, filed on November 29, 2022, and entitled "RDMA NETWORK INTERFACE CARD", and to Chinese Patent Application No. 202310144857.X, filed on January 29, 2023, and entitled "NODE ANOMALY EVENT PROCESSING METHOD, NETWORK INTERFACE CARD, AND STORAGE CLUSTER", both of which are incorporated herein by reference in their entireties.

### TECHNICAL FIELD

This application relates to the field of storage technologies, and in particular, to a node anomaly event processing method, a network interface card, and a storage cluster.

### BACKGROUND

The non-volatile memory express over fabrics (NVMe-oF) specification is a storage network protocol. Currently, a NVMe-oF-based storage device usually uses a multi-node architecture (where a node may also be understood as a controller) to implement access of a host to the storage device, to improve reliability and continuity of a storage service. For example, the host accesses a storage of the storage device separately through two paths: a path on which a node A in the storage device is located and a path on which a node B in the storage device is located. When the host accesses the storage through the path on which the node A is located, after an anomaly event occurs on the node A (for example, the node is faulty, upgraded, or restarted), the host may switch to the path on which the node B is located, and access the storage through the path on which the node B is located.

In a related technology, the host and the node A establish a heartbeat connection. The host can detect, through the heartbeat connection, whether an anomaly event occurs on the node A. When detecting that an anomaly event occurs on the node A, the host switches to the path on which the node B is located, and accesses the storage through the path on which the node B is located.

However, the foregoing method depends on a heartbeat timeout mechanism. In this case, time consumed for the host to successfully switch a path after an anomaly occurs on a node is long. Consequently, a service drops to zero for a long time during switching, and reliability and continuity of the storage service are affected.

### SUMMARY

This application provides a node anomaly event processing method, a network interface card, and a storage cluster, to effectively reduce a path switching delay of a host, and improve continuity and reliability of a storage service. Technical solutions are as follows:
According to a first aspect, a node anomaly event processing method is provided, and is applied to a network interface card in a storage device. The storage device includes the network interface card and a plurality of nodes, the network interface card is communicatively connected to a first node in the plurality of nodes, the node is configured to manage a storage, and the method includes:
When detecting an anomaly event related to the first node, the network interface card sends a notification message to a host, where the notification message indicates that an anomaly occurs on a path on which the first node is located, to enable the host to access the storage through a path on which a node other than the first node in the plurality of nodes is located.

The node in the storage device is a storage controller (controller) in the storage device, and can process a command delivered by the host, manage the storage, and the like. The anomaly event related to the first node may be an anomaly event that occurs on the first node, for example, that the first node is faulty or restarted, or may be an anomaly event that occurs on a communication link between the network interface card and the first node, for example, that the communication link is disconnected. This application is not limited thereto. In the foregoing method, instead of passively waiting for a heartbeat message to discover a fault, the network interface card is communicatively connected to the first node in the plurality of nodes. In this way, when detecting an anomaly event related to the first node, the network interface card actively sends the notification message to the host, to notify the host that an anomaly occurs the path on which the first node is located, so that the host performs path switching. This manner can effectively reduce a path switching delay of the host, and improve continuity and reliability of a storage service. It should be understood that the network interface card and the node are communicatively connected, and both belong to the storage device. Therefore, once an anomaly event related to the node occurs, the network interface card can learn of the anomaly event in a timely manner, make a response quickly, and notify the host.

In some embodiments, the notification message includes path status information, and the path status information indicates that an anomaly occurs on the path on which the first node is located.

In some embodiments, the network interface card is communicatively connected to the first node through a peripheral component interconnect express (peripheral component interconnect express, PCIe) link.

In some embodiments, the method further includes: performing link anomaly detection on the PCIe link to determine whether an anomaly event related to the first node occurs.

In some embodiments, the performing link anomaly detection on the PCIe link includes:
performing polling mechanism detection and/or interrupt detection mechanism detection on the PCIe link, and when an anomaly of the PCIe link is detected, determining that an anomaly event related to the first node occurs.

Because the network interface card is communicatively connected to the first node through the PCIe link, and a data transmission rate of the PCIe link is high, the network interface card can quickly detect, through the PCIe link, the anomaly event related to the first node. For example, if the network interface card detects that the PCIe link is disconnected, the network interface card receives an error packet through the PCIe link, or the like, the network interface card considers that there is a high probability that an anomaly event occurs on the first node. This application is not limited thereto.

In some embodiments, that the network interface card sends a notification message to a host includes any one of the following:
The network interface card sends the notification message to the host through a transport layer; and
the network interface card sends the notification message to the host through an application layer.

In the foregoing manner, the network interface card can quickly send the notification message to the host through the transport layer or the application layer, to reduce a path switching delay of the host.

In some embodiments, the method further includes:
obtaining the path status information from administrative queue information of the network interface card, where the path status information in the administrative queue information is configured by the first node based on a first command delivered by the host, the first command carries the path status information, and the first command indicates to send the notification message to the host when an anomaly event related to the first node is detected.

In the foregoing manner, the path status information is configured in the administrative queue information of the network interface card, and the first command is an asynchronous event request command, so that the network interface card can actively send the notification message to the host when detecting an anomaly event related to the first node.

In some embodiments, the method further includes:
obtaining the path status information from an input/output queue context of the network interface card, where the path status information in the input/output queue context is configured by the first node based on a second command delivered by the host, the second command indicates to generate the path status information based on an operating system type of the host, and configure the path status information in the input/output queue context.

In some embodiments, the method further includes:
receiving a third command delivered by the host, where the third command is a read command or a write command, and the third command indicates to send the notification message to the host when an anomaly event related to the first node is detected.

In the foregoing manner, the path status information is configured in the input/output queue context of the network interface card. In this way, the network interface card can send the notification message to the host when detecting an anomaly event related to the first node and receiving the third command delivered by the host, so that the host performs path switching. This process can effectively reduce a path switching delay of the host, and improve continuity and reliability of a storage service.

According to a second aspect, an embodiment of this application provides a node anomaly event processing method, applied to a host. The host is communicatively connected to a network interface card in a storage device, the storage device includes the network interface card and a plurality of nodes, the network interface card is communicatively connected to a first node in the plurality of nodes, the node is configured to manage a storage, and the method includes:
receiving a notification message sent by the network interface card when an anomaly event related to the first node is detected, where the notification message indicates that an anomaly occurs on a path on which the first node is located; and
accessing the storage based on the notification message through a path on which a node other than the first node in the plurality of nodes is located.

In some embodiments, the notification message includes path status information, and the path status information indicates that an anomaly occurs on the path on which the first node is located.

In some embodiments, that the host receives a notification message sent by the network interface card when an anomaly event related to the first node is detected includes any one of the following:

The host receives the notification message through a transport layer; and
the host receives the notification message through an application layer.

In some embodiments, the method further includes:
delivering a first command to the first node, so that the first node configures, in administrative queue information, the path status information carried in the first command, where the first command indicates to send the notification message to the host when an anomaly event related to the first node is detected.

In some embodiments, the method further includes:
delivering a second command to the first node, so that the first node generates the path status information based on an indication of the second command and an operating system type of the host, and configures the path status information in an input/output queue context.

In some embodiments, the method further includes:
delivering a third command to the network interface card, where the third command is a read command or a write command, and the third command indicates to send the notification message to the host when an anomaly event related to the first node is detected.

According to a third aspect, an embodiment of this application provides a node anomaly event processing apparatus. The apparatus is configured on a network interface card in a storage device, the storage device includes the network interface card and a plurality of nodes, the network interface card is communicatively connected to a first node in the plurality of nodes, the node is configured to manage a storage, and the apparatus includes at least one functional unit, configured to perform the node anomaly event processing method according to any one of the first aspect or the possible implementations of the first aspect.

According to a fourth aspect, an embodiment of this application provides a node anomaly event processing apparatus. The apparatus is configured on a host, the host is communicatively connected to a network interface card in a storage device, the storage device includes the network interface card and a plurality of nodes, the network interface card is communicatively connected to a first node in the plurality of nodes, the node is configured to manage a storage, and the apparatus includes at least one functional unit, configured to perform the node anomaly event processing method according to any one of the second aspect or the possible implementations of the second aspect.

According to a fifth aspect, an embodiment of this application provides a network interface card. The network interface card is configured in a storage device, the network interface card includes a processor, a storage, and an interface, the interface is configured to communicatively connect to a node in the storage device, the storage is configured to store at least one segment of program code, and the at least one segment of program code is loaded by the processor to implement the node anomaly event processing method according to any one of the first aspect or the possible implementations of the first aspect.

According to a sixth aspect, an embodiment of this application provides a storage cluster. The storage cluster includes a network interface card, a plurality of nodes, and a storage, the network interface card is communicatively connected to the node, the node is configured to manage the storage, and the network interface card is configured to perform the node anomaly event processing method according to any one of the first aspect or the possible implementations of the first aspect.

In some embodiments, the storage cluster is a centralized storage device, the node is a storage controller, the network interface card is connected to the node through a system bus, and the storage is connected to the node through the system bus.

In some other embodiments, the storage cluster is a distributed storage system, the distributed storage system includes a plurality of independent storage devices, and the storage devices are connected via a wired network or a wireless network to form a storage network. Each storage device includes the network interface card, the node, and the storage, the network interface card is connected to the node through a system bus, and the storage is connected to the node through the system bus; or each storage device includes the network interface card and the node, and the storage is communicatively connected to the node in each storage device.

According to a seventh aspect, an embodiment of this application provides a host. The host includes a processor and a storage, and the processor is configured to execute instructions stored in the storage, to enable the host to perform the node anomaly event processing method according to any one of the second aspect or the possible implementations of the second aspect.

According to an eighth aspect, an embodiment of this application provides a computer-readable storage medium. The computer-readable storage medium is configured to store at least one segment of program code, and the at least one segment of program code is used to implement the node anomaly event processing method according to any one of the first aspect or the possible implementations of the first aspect. Alternatively, the at least one segment of program code is used to implement the node anomaly event processing method according to any one of the second aspect or the possible implementations of the second aspect. The storage medium includes but is not limited to a volatile memory, for example, a random access memory, or a non-volatile memory, for example, a flash memory, a hard disk drive (hard disk drive, HDD), or a solid state drive (solid state drive, SSD).

According to a ninth aspect, an embodiment of this application provides a computer program product. When the computer program product runs on a storage device, the storage device is enabled to implement the node anomaly event processing method according to any one of the first aspect or the possible implementations of the first aspect. Alternatively, when the computer program product runs on a host, the host is enabled to implement the node anomaly event processing method according to any one of the second aspect or the possible implementations of the second aspect. The computer program product may be a software installation package. When the foregoing method needs to be implemented, the computer program product may be downloaded and executed.

### BRIEF DESCRIPTION OF DRAWINGS

FIG. 1 is a diagram of a storage architecture according to an embodiment of this application;
FIG. 2 is a diagram of an implementation environment according to an embodiment of this application;
FIG. 3 is a diagram of another implementation environment according to an embodiment of this application;
FIG. 4 is a diagram of a structure of a host according to an embodiment of this application;
FIG. 5 is a diagram of a structure of a storage device according to an embodiment of this application;
FIG. 6 is a diagram of a structure of a distributed storage system according to an embodiment of this application;
FIG. 7 is a diagram of logic units of a network interface card according to an embodiment of this application;
FIG. 8 shows a node anomaly event processing method according to an embodiment of this application;
FIG. 9 shows another node anomaly event processing method according to an embodiment of this application;
FIG. 10 shows another node anomaly event processing method according to an embodiment of this application;
FIG. 11 is a diagram of a node anomaly event processing method according to an embodiment of this application;
FIG. 12 is a diagram of another node anomaly event processing method according to an embodiment of this application;
FIG. 13 is a diagram of a structure of a node anomaly event processing apparatus according to an embodiment of this application; and
FIG. 14 is a diagram of a structure of another node anomaly event processing apparatus according to an embodiment of this application.

### DESCRIPTION OF EMBODIMENTS

To make objectives, technical solutions, and advantages of this application clearer, the following further describes the implementations of this application in detail with reference to the accompanying drawings.

For ease of understanding, the following first describes crucial terms and crucial concepts in this application.

NVMe is a group of software and hardware standards that allow a solid state drive (SSD) to use a peripheral component interconnect express (PCIe). The PCIe is an actual physical connection channel. NVM represents a non-volatile memory (non-volatile memory), and is a common flash memory form of the SSD. NVMe mainly provides a native interface specification with a low delay and internal concurrency for a storage device that is based on a flash memory, and supports native storage concurrency for a modern central processing unit (CPU), a computer platform, and a related application, so that host (host) hardware and software can fully use a parallel storage capability of a solid state storage device.

A NVMe command is a command defined in a NVMe protocol. Commands in the NVMe protocol are classified into an administrative (Admin) command and an input/output (I/O) command. In some embodiments, the I/O command is also referred to as a NVM command. The Admin command is used to manage and control a NVMe storage medium. The I/O command is used to perform data transmission. For example, the I/O command in the NVMe protocol includes a NVMe read command and a NVMe write command.

A queue pair (QP) is a pair of queue pairs used to carry the NVMe command, and includes one submission queue (SQ) and one completion queue (CQ). For example, a host submits a command to a NVMe node (controller) by using the SQ, and the NVMe controller submits a completion status to the CQ.

The NVMe-oF specification is a high-speed storage protocol established based on the NVMe protocol. NVMe-oF is used to access the NVMe storage medium across networks. NVMe-oF adds a fabric-related command on a basis of NVMe, so that an application scenario of NVMe is not limited to the inside of one device, but can be extended to cross-network communication. "Fabric" is a network between the host and the storage medium. Typical fabric forms are, for example, the Ethernet, a fibre channel, infinite bandwidth (InfiniBand, IB), and remote direct memory access (remote direct memory access, RDMA). For example, the fabric is implemented by using an RDMA over converged Ethernet (RDMA over converged Ethernet, RoCE). This application is not limited thereto.

The RDMA is a technology for accessing a memory of a remote device by bypassing an operating system kernel of the remote device. An operating system is usually bypassed in the RDMA technology. This not only saves a large quantity of CPU resources, but also increases a throughput, and reduces a network communication delay.

A namespace (namespace) is a formatted non-volatile memory that can be directly accessed by the host, or may be understood as storage space. In some embodiments, the namespace is presented to the host as a real physical disk. For example, if one SSD disk includes two namespaces, the host can access two physical disks, and may separately format and partition the two physical disks.

The following describes an application scenario and an implementation environment in this application.

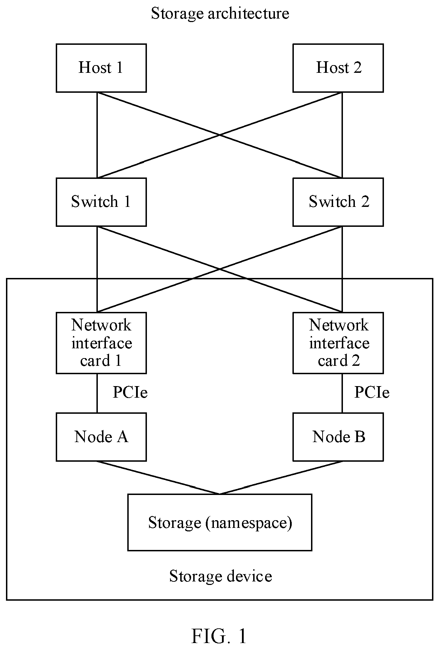

The technical solutions provided in embodiments of this application can be applied to a NVMe-oF-based storage architecture, and can improve continuity and reliability of a storage service. The following describes the application scenario in this application with reference to FIG. 1.

FIG. 1 is a diagram of a storage architecture according to an embodiment of this application. As shown in FIG. 1, the storage architecture includes a host (host), a switch, and a NVMe-oF-based storage device. The storage device uses a dual-node architecture to implement access of the host to a storage in the storage device. The storage device includes a network interface card (network interface card, NIC), a node A (node A), a node B (node B), and the storage. Data in the storage may be indexed by using a namespace (namespace), and the network interface card is communicatively connected to the node through a PCIe link. For example, a host 1 can access the storage through four redundant paths: paths on which the node Ain the storage device is located and paths on which the node B in the storage device is located. When the host 1 accesses the storage through the path on which the node A is located, after an anomaly event occurs on the node A (for example, the node is faulty, upgraded, or restarted), the host 1 may switch to the path on which the node B is located, and access the storage through the path on which the node B is located, to implement continuity of a storage service. In a related technology, the host 1 and the node A establish a heartbeat connection. The host 1 detects, through the heartbeat connection, whether an anomaly event occurs on the node A. When detecting that an anomaly event occurs on the node A, the host 1 switches to the path on which the node B is located, and accesses the storage through the path on which the node B is located. However, the foregoing method depends on a heartbeat timeout mechanism. In this case, time consumed for the host to successfully switch a path after an anomaly occurs on a node is long. Consequently, a service drops to zero for a long time during switching, and reliability and the continuity of the storage service are affected.

Based on the application scenario shown in FIG. 1, this application provides a node anomaly event processing method, to reduce a path switching delay of the host and improve the continuity and the reliability of the storage service when an anomaly event related to a node in the storage device is detected (or in a node reset scenario).

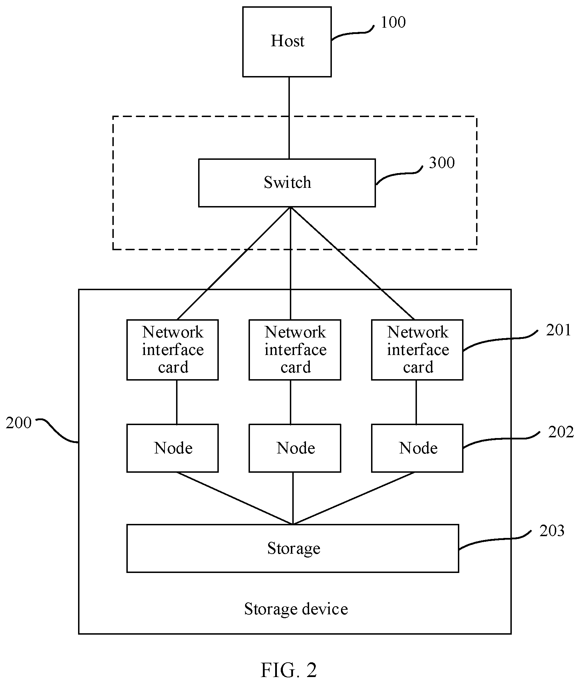

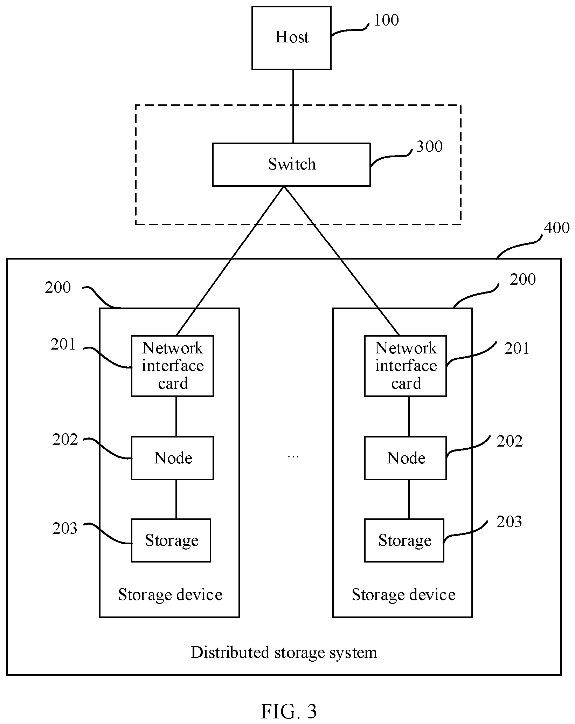

The following describes the implementation environment in this application with reference to FIG. 2 and FIG. 3.

FIG. 2 is a diagram of an implementation environment according to an embodiment of this application. As shown in FIG. 2, the implementation environment includes a host 100 and a storage device 200. The storage device 200 includes network interface cards 201, a plurality of nodes 202, and a storage 203. The host 100 is directly or indirectly connected to the storage device 200 via a wired network or a wireless network. It should be understood that both FIG. 1 and FIG. 2 show centralized storage devices (or storage arrays), for example, storage area networks (storage area networks, SANs). For example, the node 202 is a storage controller (controller), and the storage 203 is a persistent storage medium, for example, a hard disk drive HDD or a solid state drive SSD. This application is not limited thereto. The storage device 200 may also be understood as a storage cluster including the plurality of nodes 202 (namely, storage controllers).

The host 100 is a device configured to run a storage service, for example, a device running a RoCE service. This is not limited herein. For example, the host 100 runs the storage service by accessing the storage device 200. In this embodiment of this application, the host 100 has a path switching capability, and can switch from one path to another path to access the storage device 200, to improve continuity and reliability of the storage service. For example, the host 100 is a terminal device or a server on which a client is run. This application is not limited thereto. For example, a protocol stack of the host 100 includes a file system (file system), block input/output (block I/O), a small computer system interface (small computer system interface, SCSI), NVMe, a driver (driver), a physical apparatus (physical device), and the like. This application is not limited thereto. In addition, there may be one or more hosts 100. This is not limited in this application.

The storage device 200 is configured to provide accessible storage space for the host 100, for example, provide read/write access to disk space. In this embodiment of this application, the storage device 200 includes the network interface cards 201, the plurality of nodes 202, and the storage 203. The network interface card 201 is connected to the node 202 through a system bus (for example, a PCIe link), and the storage 203 is connected to the node 202 through the system bus. The node 202 is a storage controller (controller) in the storage device, and can process a command delivered by the host, manage the storage 203, and the like. It should be understood that, quantities of network interface cards 201 and nodes 202 shown in the figure and a connection relationship between the network interface card 201 and the node 202 are merely examples for description. One network interface card may be connected to one or more nodes, and one node may be connected to one or more network interface cards. This is not limited in this application. In this embodiment of this application, the network interface card 201 has a capability of processing an anomaly event related to the node 202, including a capability of detecting the anomaly event related to the node 202 and a capability of notifying the host 100 of the anomaly event. For example, the network interface card 201 is communicatively connected to a first node in the plurality of nodes 202. When detecting an anomaly event related to the first node, the network interface card 201 can send a notification message to the host 100, to notify the host 100 that an anomaly occurs a path on which the first node is located, to enable the host 100 to access the storage 203 through a path on which a node other than the first node in the plurality of nodes 202 is located.

In some embodiments, the implementation environment further includes a switch 300, and the host 100 may access the storage device 200 through transferring of the switch 300. This application is not limited thereto. It should be understood that the switch 300 is an optional device, and the host 100 may alternatively access the storage device 200 directly.

In some embodiments, the wireless network or the wired network uses a standard communication technology and/or protocol. A network is usually the internet, but may alternatively be any network, including but not limited to any combination of a local area network (local area network, LAN), a metropolitan area network (metropolitan area network, MAN), a wide area network (wide area network, WAN), a mobile network, a wired network, a wireless network, a private network, or a virtual private network. In some implementations, technologies and/or formats including a hypertext markup language (hypertext markup language, HTML), an extensible markup language (extensible markup language, XML), and the like are used to represent data exchanged via the network. In addition, all or some links can further be encrypted by using conventional encryption technologies such as a secure socket layer (secure socket layer, SSL), transport layer security (transport layer security, TLS), a virtual private network (virtual private network, VPN), and internet protocol security (internet protocol security, IPsec). In some other embodiments, customized and/or dedicated data communication technologies can be further used to replace or supplement the foregoing data communication technologies.

In the implementation environment shown in FIG. 2, the storage device 200 includes the plurality of nodes 202, so that the host 100 can access the storage device 200 through a plurality of paths. It should be understood that a quantity of storage devices 200 is not limited in this application. When there are a plurality of storage devices 200, the node anomaly event processing method provided in this application is also applicable. The following describes this case with reference to a distributed architecture shown in FIG. 3.

FIG. 3 is a diagram of another implementation environment according to an embodiment of this application. As shown in FIG. 3, the implementation environment includes a host 100 and a distributed storage system 400. The host 100 is directly or indirectly connected to the distributed storage system 400 via a wired network or a wireless network. For example, the distributed storage system 400 is a storage cluster including a plurality of independent storage devices 200. The storage devices 200 are connected via the wired network or the wireless network to form a storage network.

The host 100 runs a storage service by accessing the distributed storage system 400. The host 100 has a path switching capability, and can switch from one storage device 200 to another storage device 200 to run the storage service, so as to improve continuity and reliability of the storage service. There may be one or more hosts 100. This is not limited in this application.

The distributed storage system 400 is configured to provide accessible storage space for the host 100, for example, provide read/write access to disk space. For example, each storage device 200 includes a network interface card 201, at least one node 202, and a storage 203. In each storage device 200, the network interface card 201 is connected to the node 202 through a system bus (for example, a PCIe link), and the storage 203 is connected to the node 202 through the system bus. The node 202 is configured to manage the storage 203. It should be understood that, quantities of network interface cards 201 and nodes 202 shown in the figure and a connection relationship between the network interface card 201 and the node 202 are merely examples for description. One network interface card may be connected to one or more nodes, and one node may be connected to one or more network interface cards. This is not limited in this application.

In some embodiments, a first network interface card and a first node are located in a first storage device, and another node selected by the host is located in a second storage device. The another node selected by the host is a node selected by the host for path switching. For example, when the host 100 accesses the first storage device, the first network interface card detects an anomaly event related to the first node, and the first network interface card sends a notification message to the host 100, to notify the host 100 that an anomaly occurs on a path on which the first node is located, so that the host 100 accesses the second storage device to run the storage service (it should be understood that a combination of the nodes 202 in the distributed storage system 400 is similar to that of the plurality of nodes 202 in the implementation environment shown in FIG. 2, and details are not described herein again).

In some embodiments, the implementation environment further includes a switch 300, and this is similar to the implementation environment shown in FIG. 2. Therefore, details are not described again. In some embodiments, the wireless network or the wired network uses a standard communication technology and/or protocol, and this is similar to the implementation environment shown in FIG. 2. Therefore, details are not described again.

It should be noted that FIG. 3 shows merely one form of the distributed architecture provided in this application. In some other embodiments, in a distributed storage system provided in this application, each storage device includes a network interface card and a node, and a storage in the distributed storage system is communicatively connected to the node in each storage device. In other words, the storage in the distributed storage system may be located inside the storage device, or may be located outside the storage device. In addition, a quantity of storages in the distributed storage system is not limited in this application. There may be one or more storages, and a quantity can be configured based on an actual requirement. Details are not described herein again.

The following describes hardware structures of devices in the foregoing implementation environment.

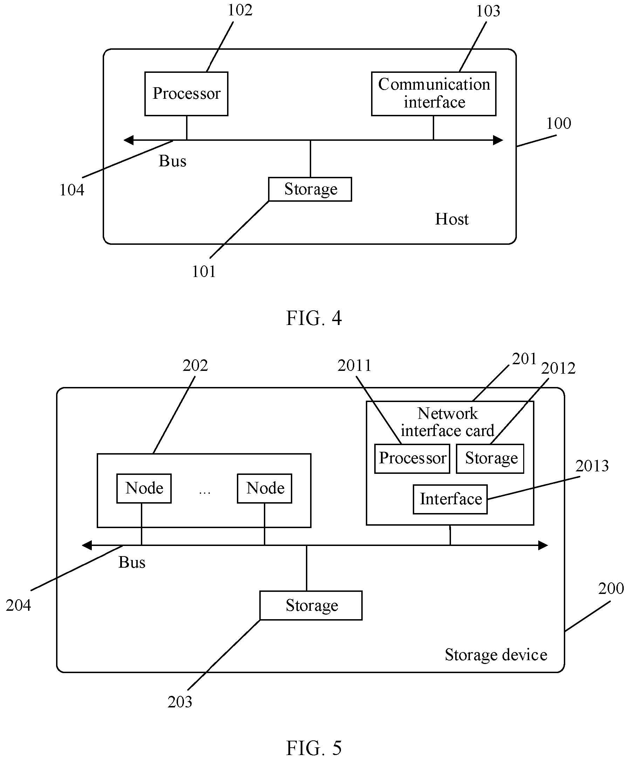

FIG. 4 is a diagram of a structure of a host according to an embodiment of this application. As shown in FIG. 4, the host 100 includes a storage 101, a processor 102, a communication interface 103, and a bus 104. The storage 101, the processor 102, and the communication interface 103 are communicatively connected to each other through the bus 104.

The storage 101 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed by a computer. However, the storage 101 is not limited thereto. For example, the storage 101 is configured to store at least one segment of program code. When the program code stored in the storage 101 is executed by the processor 102, the processor 102 and the communication interface 103 are configured to perform steps related to the host in the following node anomaly event processing method.

The processor 102 is a network processor (network processor, NP), a central processing unit (central processing unit, CPU), an application-specific integrated circuit (application-specific integrated circuit, ASIC), or an integrated circuit configured to control program execution of the solutions in this application. The processor 102 may be a single-core (single-CPU) processor, or may be a multi-core (multi-CPU) processor. There may be one or more processors 102. The storage 101 and the processor 102 may be disposed separately, or may be integrated together.

The communication interface 103 uses a transceiver module, for example, a transceiver, to implement communication between the host 100 and another device or a communication network. For example, the communication interface 103 may be configured to deliver a command to a storage device 200. For another example, the communication interface 103 may be configured to receive a notification message sent by a storage device 200. This application is not limited thereto.

The bus 104 may include a path for transferring information between components (for example, the storage 101, the processor 102, and the communication interface 103) of the host 100.

FIG. 5 is a diagram of a structure of a storage device according to an embodiment of this application. As shown in FIG. 5, the storage device 200 is a NVMe-oF-based centralized storage device, and includes a network interface card 201, a plurality of nodes 202, a storage 203, and a bus 204. The network interface card 201, the plurality of nodes 202, and the storage 203 are communicatively connected to each other through the bus 204.

The network interface card 201 is configured to implement communication between the storage device 200 and another device or a communication network. For example, the storage device 200 may send a notification message to a host 100 via the network interface card 201. In this embodiment of this application, the network interface card 201 has a capability of processing an anomaly event related to a node, including a capability of detecting the anomaly event related to the node and a capability of notifying the host 100 of the anomaly event. The network interface card 201 includes a processor 2011, a storage 2012, and an interface 2013. The interface 2013 is configured to communicatively connect to at least one node 202. The storage 2012 is configured to store at least one segment of program code. The at least one segment of program code is loaded by the processor 2011 to implement steps related to the network interface card in the following node anomaly event processing method. The processor 2011 may be an NPU, a CPU, or the like. In addition, the processor 2011 may be a single-core (single-CPU) processor, or may be a multi-core (multi-CPU, MPU) processor. This application is not limited thereto. In some embodiments, the network interface card 201 is an RDMA network interface card (RNIC) or another smart network interface card (smart NIC). This application is not limited thereto.

The node 202 is configured to: manage the storage 203 and process a command sent by the host 100. For example, the node 202 writes data into the storage 203 or reads data from the storage 203 based on an I/O command sent by the host 100. This application is not limited thereto. During actual application, the node 202 may have a plurality of forms. For example, the node 202 is a body for processing a NVMe-oF protocol. For example, the node 202 includes a CPU and a memory. The CPU is configured to perform operations such as address translation and data reading/writing. The memory is configured to temporarily store data to be written into the storage 203, or read, from the storage 203, data to be sent to the host 100. This application is not limited thereto.

The storage 203 includes at least one solid state drive SSD, configured to store data. The SSD is a storage that mainly uses a flash memory as a permanent storage.

The bus 204 may include a path for transferring information between components (for example, the network interface card 201, the plurality of nodes 202, and the storage 203) in the storage device 200.

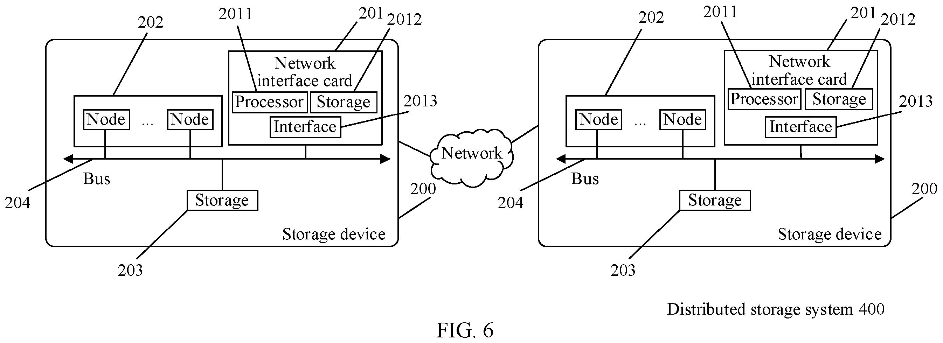

FIG. 6 is a diagram of a structure of a distributed storage system according to an embodiment of this application. As shown in FIG. 6, the distributed storage system 400 includes a plurality of independent storage devices 200. Each storage device includes a network interface card 201, at least one node 202, and a storage 203. In each storage device 200, the network interface card 201 is connected to the node 202 through a system bus, and the storage 203 is connected to the node 202 through the system bus. The node 202 is configured to manage the storage 203. The storage devices 200 are connected via a network. The network may be a wide area network, a local area network, or the like. This application is not limited thereto. Specifically, the storage devices 200 are connected to the network via network interface cards 201 in the storage devices 200. It should be noted that a structure of any storage device 200 in a storage cluster shown in FIG. 6 is similar to that of the storage device shown in FIG. 5. Therefore, details are not described herein again. It should be noted that, based on the foregoing descriptions of FIG. 3, it can be learned that a location of a storage and a quantity of storages in the distributed storage system are not limited in this application. In other words, FIG. 6 shows merely one of forms of the distributed storage system provided in this application, and does not constitute a limitation on this application. Details are not described herein again.

The following describes, by using several method embodiments, the node anomaly event processing method provided in this application.

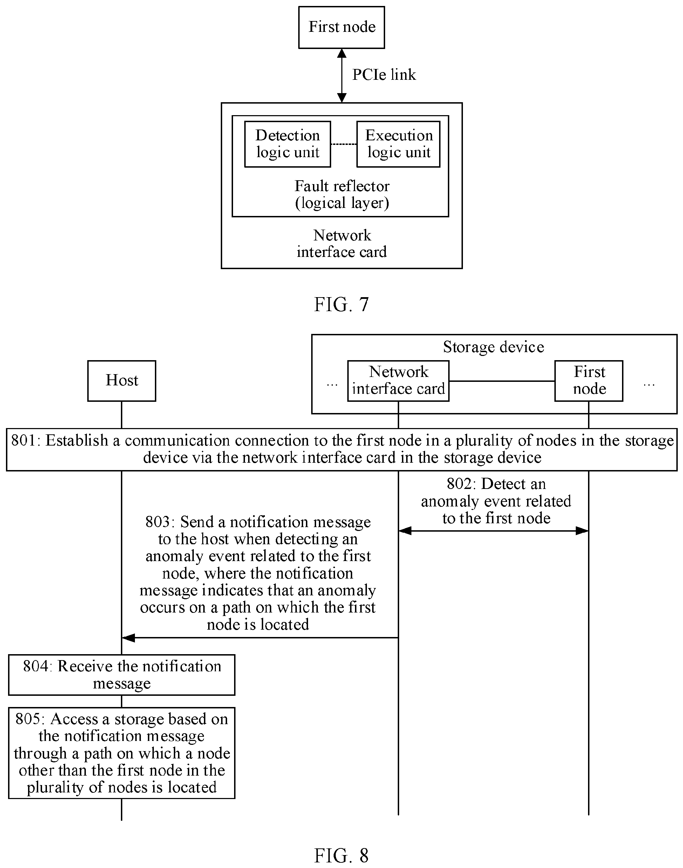

Based on the foregoing descriptions of the storage device 200, it can be learned that the network interface card 201 in the storage device 200 has a capability of processing an anomaly event related to the node 202, including a capability of detecting the anomaly event related to the node 202 and a capability of notifying the host 100 of the anomaly event. Refer to FIG. 7. The following uses a logical layer as an example to describe the capability of the network interface card 201 in the storage device 200.

FIG. 7 is a diagram of logic units of a network interface card according to an embodiment of this application. As shown in FIG. 7, the network interface card is communicatively connected to a first node in a plurality of nodes through a PCIe link. A fault reflector is deployed on the network interface card, and the fault reflector is run by a processor of the network interface card, and is configured to provide a capability of processing an anomaly event related to a node. The fault reflector includes a detection logic unit and an execution logic unit. The detection logic unit is configured to: detect an anomaly event related to the first node, and notify the execution logic unit when detecting an anomaly event related to the first node. For example, the detection logic unit may notify the execution logic unit by using an interface invoking method or another method of message communication inside a chip. This is not limited herein. For example, the detection logic unit is executed by a CPU or an MPU. This application is not limited thereto. The execution logic unit is configured to perform, based on the notification of the detection logic unit, a step of sending a notification message to a host 100, to notify the host 100 that an anomaly occurs on a path on which the first node is located. For example, the execution logic unit is executed by a CPU or an NPU. This application is not limited thereto.

Based on this, the following uses several method embodiments to describe, by using interaction between the host 100 and the storage device 200 as an example, the node anomaly event processing method provided in this application.

FIG. 8 shows a node anomaly event processing method according to an embodiment of this application. As shown in FIG. 8, interaction between a host 100 and a storage device 200 is used as an example for description. The method includes the following step 801 to step 805.

801: The host establishes a communication connection to a first node in a plurality of nodes in the storage device via a network interface card in the storage device.

In this embodiment of this application, the storage device includes the plurality of nodes, the first node is any one of the plurality of nodes, and the node is also referred to as a storage controller. The network interface card in the storage device is communicatively connected to the first node. The host sends a communication connection request to the first node via the network interface card, and the first node establishes the communication connection to the host based on the received communication connection request, so that the host can access a storage through a path on which the first node is located.

For example, the host and the first node establish a NVMe connection according to the NVMe protocol, so that the host can deliver a NVMe command to the first node. The NVMe command includes an administrative command and an input/output command. In some embodiments, the network interface card in the storage device is an RNIC, and an RDMA connection can be established between the host and the first node based on an RDMA protocol, so that the host can deliver an RDMA command to the first node to implement an RDMA function. This not only saves a large quantity of CPU resources, but also increases a throughput, and reduces a network communication delay.

802: The network interface card in the storage device detects an anomaly event related to the first node.

In this embodiment of this application, the network interface card in the storage device performs link anomaly detection on a PCIe link between the network interface card and the first node, to determine whether an anomaly event related to the first node occurs. The anomaly event related to the first node may be an anomaly event that occurs on the first node, for example, that the first node is faulty or restarted, or may be an anomaly event that occurs on the PCIe link between the network interface card and the first node, for example, that the PCIe link is disconnected. This application is not limited thereto. It should be understood that the network interface card may infer, based on an anomaly of the PCIe link, that an anomaly event occurs on the first node. For example, if the network interface card detects that the PCIe link is disconnected, the network interface card receives an error packet through the PCIe link, or the like, the network interface card considers that there is a high probability that an anomaly event occurs on the first node. This application is not limited thereto. In addition, because the network interface card is communicatively connected to the first node through the PCIe link, and a data transmission rate of the PCIe link is high, the network interface card can quickly detect, through the PCIe link, the anomaly event related to the first node.

In some embodiments, the network interface card performs polling mechanism detection and/or interrupt detection mechanism detection on the PCIe link, and when the anomaly of the PCIe link is detected, the network interface card determines that an anomaly event related to the first node occurs. A polling mechanism means that the network interface card monitors a running status of an external device of the network interface card in a polling manner. An interrupt detection mechanism means that when an anomaly event occurs on the external device of the network interface card, the external device actively reports an interrupt signal to the network interface card, so that the network interface card learns that an anomaly event occurs on the external device.

Certainly, the network interface card can further detect the anomaly event related to the first node in another manner. For example, the network interface card establishes a heartbeat connection to the first node, and detects, through the heartbeat connection, the anomaly event related to the first node. This application is not limited thereto.

803: The network interface card in the storage device sends a notification message to the host when detecting an anomaly event related to the first node, where the notification message indicates that an anomaly occurs on the path on which the first node is located.

In this embodiment of this application, when detecting that an anomaly event occurs on the first node, the network interface card in the storage device generates a notification message based on information preconfigured in the network interface card, and sends the notification message to the host. The notification message includes path status information, and the path status information indicates that an anomaly occurs on the path on which the first node is located.

In addition, in this step, the network interface card sends the notification message to the host in at least one of the following manners:

In a first manner, when detecting an anomaly event related to the first node, the network interface card actively generates a notification message, and sends the notification message to the host.

In a second manner, when detecting an anomaly event related to the first node, and receiving a read command or a write command sent by the host, the network interface card actively generates a notification message, and sends the notification message to the host.

In the foregoing manner, when detecting an anomaly event related to the first node, the network interface card can actively notify the host, so that the host accesses the storage through a path on which a node other than the first node in the plurality of nodes is located. It should be noted that the foregoing two manners of sending the notification message are described in detail in subsequent embodiments. Details are not described herein.

After the foregoing step 802 and step 803, the network interface card in the storage device can detect the anomaly event related to the first node, and actively notify the host when detecting an anomaly event related to the first node. The network interface card may periodically detect the anomaly event related to the first node, or may continuously detect the anomaly event related to the first node. This application is not limited thereto. In addition, with reference to the foregoing descriptions of FIG. 7, it can be learned that a fault reflector is deployed on the network interface card in the storage device, and can provide a function of processing an anomaly event related to a node. Correspondingly, the foregoing step 802 may be performed by a detection logic unit in the fault reflector, and the foregoing step 803 may be performed by an execution detection unit in the fault reflector.

804: The host receives the notification message.

805: The host accesses the storage based on the notification message through the path on which a node other than the first node in the plurality of nodes is located.

In this embodiment of this application, the host obtains the path status information from the notification message. Because the path status information indicates that an anomaly occurs on the path on which the first node is located, the host learns that there is a high probability that the host cannot access the storage through the path on which the first node is located. Therefore, the host accesses the storage through the path on which a node other than the first node in the plurality of nodes is located, to implement continuity of a storage service.

In the foregoing node anomaly event processing method, the network interface card in the storage device is communicatively connected to the first node. When detecting an anomaly event related to the first node, the network interface card can send the notification message to the host in a timely manner, to notify the host that an anomaly occurs on the path on which the first node is located, so that the host performs path switching. This manner can effectively reduce a path switching delay of the host, and improve the continuity and reliability of the storage service.

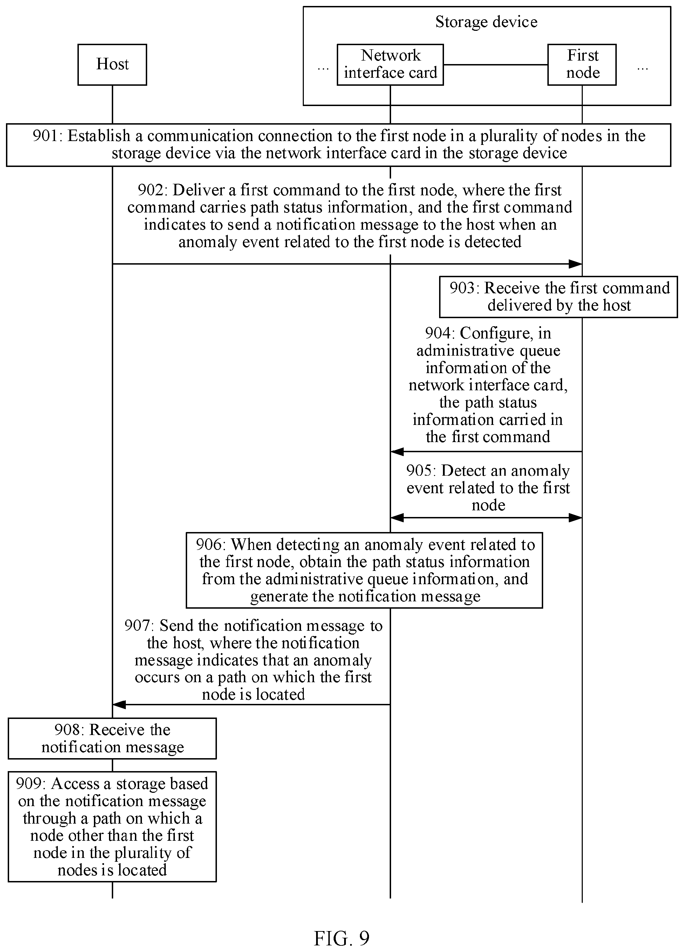

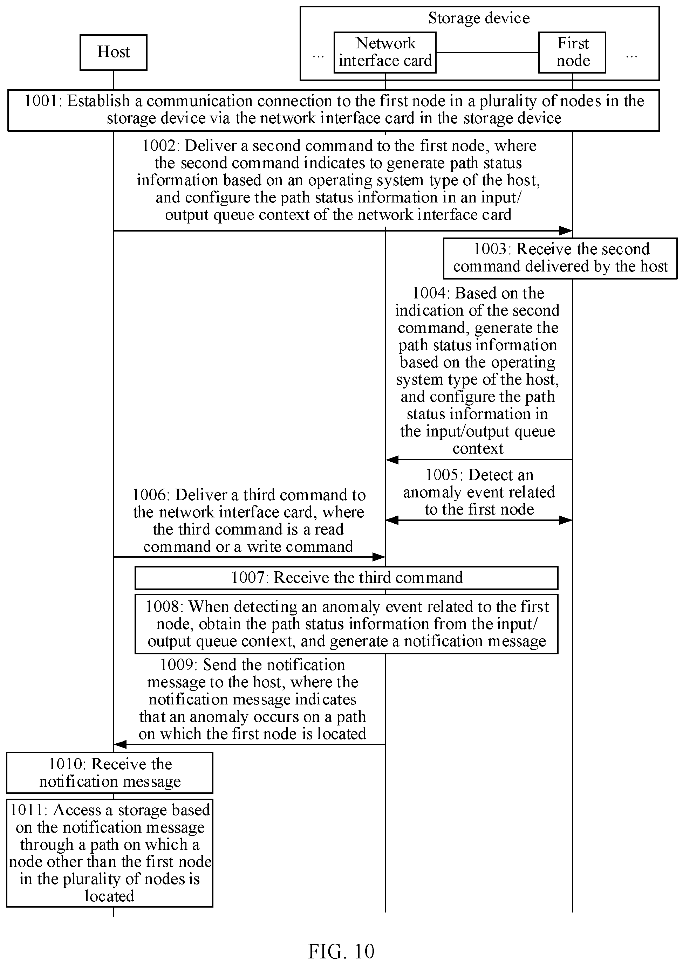

Based on the embodiment shown in FIG. 8, it can be learned that the network interface card in the storage device sends the notification message to the host in at least one manner. The following separately describes the foregoing two manners by using embodiments shown in FIG. 9 and FIG. 10.

FIG. 9 shows another node anomaly event processing method according to an embodiment of this application. As shown in FIG. 9, interaction between a host 100 and a storage device 200 is used as an example for description. The method includes the following step 901 to step 909.

901: The host establishes a communication connection to a first node in a plurality of nodes in the storage device via a network interface card in the storage device.

This step is similar to step 801 in the embodiment shown in FIG. 8. Therefore, details are not described again.

902: The host delivers a first command to the first node, where the first command carries path status information, and the first command indicates to send a notification message to the host when an anomaly event related to the first node is detected.

The first command is an administrative command. The host delivers the first command to the first node by using an administrative queue (admin queue), and the administrative queue is used to store a NVMe administrative command. For example, the first command is an asynchronous event request (asynchronous event request, AER) command. The AER command is an asynchronous command, and is used to notify the host of a status, an error, health information, and the like when some specific events occur. In other words, the host does not require immediate reporting of completion of the AER command, and the completion can be reported when an anomaly event occurs. It should be understood that the host can deliver at least one AER command to a node to enable the node to report an asynchronous event. Timeout time is not set for this command. When an asynchronous event needs to be reported to the host, the node generates one piece of completion queue entry (completion queue entry, CQE) information, and sends the CQE information to a completion queue (completion queue, CQ) of the host.

The path status information can be configured based on an actual requirement. This is not limited in this application. For example, the path status information is 03h. For a detailed definition of the path status information, refer to the following Table 1 (it should be understood that the following Table 1 is merely an example for description of the path status information, another similar field that can indicate the path status information in a related protocol can also be applied to this application, and this application is not limited thereto). In some embodiments, the first command further carries a command identifier of the first command. This application is not limited thereto.

**Table 1 Asynchronous event information (asynchronous event information)-error status (error status)**

| Value (value) | Description (description) |
|---|---|
| 00h | ... |
| 01h | ... |
| 02h | ... |
| 03h | Persistent internal error (persistent internal error): A persistent error occurs and a controller cannot match the error to one command. If this error occurs, CSTS.CFS is set to 1, and the host needs to perform a restart operation. |
| 04h | ... |
| 05h | ... |
| 06h to FFh | ... |

903: The first node receives the first command delivered by the host.

904: The first node configures, in administrative queue information of the network interface card, the path status information carried in the first command.

The administrative queue information is information maintained by the network interface card, and is stored on the network interface card. The first node parses the received first command to obtain the path status information, invokes a preset interface provided by the network interface card, and configures the path status information in the administrative queue information, so that when it is subsequently detected that an anomaly event occurs on the first node, the path status information is obtained from the administrative queue information, and the first command is completed. In addition, based on the foregoing step 902, it can be learned that the first command further includes the command identifier of the first command, and related information carried in the first command may be collectively referred to as first preset information. In this step, the first node can configure the first preset information in the administrative queue information based on the received first command. It should be understood that the administrative queue information is context information related to the administrative queue. Therefore, a life cycle of the administrative queue information is consistent with a life cycle of the administrative queue.

In some embodiments, when the first command is an n^{th} AER command delivered by the host, the first node configures the path status information in the administrative queue information. n is a positive integer. For example, n is 1, to be specific, the first command is a 1^{st} AER command delivered by the host. This application is not limited thereto, and n can be set based on an actual requirement. It should be noted that a quantity of AER commands delivered by the host to the first node is limited, or a quantity of AER events that can be processed by the first node is limited. The foregoing process may be understood as that the first node transfers a specific AER command to the network interface card for processing, in other words, a specific AER command that is transferred by the first node to the network interface card for processing is preset, so that the network interface card is enabled to report the asynchronous event.

After the foregoing step 902 to step 904, the host delivers the first command to the first node, so that the first node configures the path status information in the administrative queue information of the network interface card. In this way, the network interface card can send a corresponding notification message to the host when detecting an anomaly event related to the first node.

905: The network interface card in the storage device detects an anomaly event related to the first node.

This step is similar to step 802 in the embodiment shown in FIG. 8. Therefore, details are not described again.

906: When detecting an anomaly event related to the first node, the network interface card in the storage device obtains the path status information from the administrative queue information of the network interface card, and generates the notification message.

Based on the foregoing step 904, it can be learned that preconfigured information in the administrative queue information includes the path status information, and may further include the command identifier of the first command. Correspondingly, the notification message generated by the network interface card includes the path status information, and may further include the command identifier of the first command. Details are not described herein again.

The following uses an example in which the notification message is CQE information to describe specific content of the notification message. For example, the notification message includes the following content:
1. DW0: An error status (error status) includes a built-in error status 03h (that is, the path status information, which is preconfigured by using interface parameters of a driver and the network interface card, where reference is made to the foregoing step 902).
2. DW1: Reserved (reserved): 00.
3. DW2: Submission queue identifier (submission queue identifier): 0 (which is preconfigured by using the interface parameters of the driver and the network interface card, where reference is made to the foregoing step 902). Submission queue head pointer (submission queue head pointer, SQHD): 0 (which is preconfigured by using the interface parameters of the driver and the network interface card, where reference is made to the foregoing step 902).
4. DW3: Command identifier: The command identifier is obtained by parsing the first command (which is preconfigured by using the interface parameters of the driver and the network interface card).

It should be understood that a function of the notification message is to notify the host that an anomaly occurs on a path on which the first node is located. Therefore, information other than the path status information in the notification message is optional information, and can be configured based on a requirement. This application is not limited to the content shown in the foregoing example. For example, a status of a command indicated in a CQE is defined based on a status field of a command status field (status field). This application is not limited to the content shown in the foregoing example.

907: The network interface card in the storage device sends the notification message to the host, where the notification message indicates that an anomaly occurs on the path on which the first node is located.

The network interface card sends the notification message to the host through a transport layer. For example, the notification message is an RDMA-based connection management (CM) packet. This application is not limited thereto.

908: The host receives the notification message.

909: The host accesses a storage based on the notification message through a path on which a node other than the first node in the plurality of nodes is located.

The foregoing step 907 to step 909 are similar to step 803 to step 805 in the embodiment shown in FIG. 8. Therefore, details are not described again.

In the foregoing node anomaly event processing method, the path status information is configured in the administrative queue information of the network interface card. In this way, the network interface card can actively send the notification message to the host when detecting an anomaly event related to the first node, so that the host performs path switching. This process can effectively reduce a path switching delay of the host, and improve continuity and reliability of a storage service.

FIG. 10 shows another node anomaly event processing method according to an embodiment of this application. As shown in FIG. 10, interaction between a host 100 and a storage device 200 is used as an example for description. The method includes the following step 1001 to step 1011.

1001: The host establishes a communication connection to a first node in a plurality of nodes in the storage device via a network interface card in the storage device.

This step is similar to step 801 in the embodiment shown in FIG. 8. Therefore, details are not described again.

1002: The host delivers a second command to the first node, where the second command indicates to generate path status information based on an operating system type of the host, and configure the path status information in an input/output queue context of the network interface card.

The second command is an administrative command, and the host delivers the second command to the first node by using an administrative queue. The input/output queue context is information maintained by the network interface card, is stored on the network interface card, and is context information related to an input/output queue. The input/output queue is used to store a NVMe I/O command.

1003: The first node receives the second command delivered by the host.

1004: Based on the indication of the second command, the first node generates the path status information based on the operating system type of the host, and configures the path status information in the input/output queue context.

The first node parses the received second command; and based on the indication of the second command, generates the path status information based on the operating system type of the host, invokes a preset interface provided by the network interface card, and configures the path status information in the input/output queue context, so that the network interface card responds, based on the input/output queue context, to an I/O command delivered by the host. It should be understood that the input/output queue context is context information related to the input/output queue. Therefore, a life cycle of the input/output queue context is consistent with a life cycle of the input/output queue. In some embodiments, the path status information generated in this step may be referred to as second preset information.

The path status information can be configured based on an actual requirement. This is not limited in this application. For example, the path status information is 0×360h, where 0×3 indicates a path error (for a detailed definition of 0×3, refer to the following Table 2, and it should be understood that the following Table 2 is merely an example for description of the path status information, another similar field that can indicate the path status information in a related protocol can also be applied to this application, and this application is not limited thereto), and 0×60 indicates that the node detects the path error. This application is not limited thereto. It should be noted that a specific meaning of the path status information is merely an example for description, and does not constitute a limitation on this application.

**Table 2 Status code (status code)-status code type value (status code type value)**

| Value (value) | Description (description) |
|---|---|
| 0h | ... |
| 1h | ... |
| 2h | ... |
| 3h | Path related status (path related status): indicates that a command specified by a command and submission queue identifier in a completion queue entry has completed, these status values are generic across all command types, and these values may indicate that an additional process is needed and indicate a status value specific to the following content: |
| | a connection between the host and a controller that processes a command; or |
| | a characteristic that supports asymmetric namespace access reporting and a characteristic of a relationship between a controller that processes a command and a specified namespace. |
| 4h to 6h | ... |
| 7h | ... |

After the foregoing step 1002 to step 1004, the host delivers the second command to the first node, so that the first node configures the path status information in the input/output queue context of the network interface card. In this way, the network interface card can send a corresponding notification message to the host when detecting an anomaly event related to the first node and receiving the I/O command delivered by the host.

1005: The network interface card in the storage device detects an anomaly event related to the first node.

This step is similar to step 802 in the embodiment shown in FIG. 8. Therefore, details are not described again.

1006: The host delivers a third command to the network interface card, where the third command is a read command or a write command, and the third command indicates to send the notification message to the host when an anomaly event related to the first node is detected.

The host delivers the third command to the first node by using the input/output queue, and the third command is intercepted by the network interface card. The third command is the I/O command.

1007: The network interface card in the storage device receives the third command.

1008: When detecting an anomaly event related to the first node, the network interface card in the storage device obtains the path status information from the input/output queue context, and generates the notification message.

In some embodiments, the notification message further includes a command identifier of the third command. This application is not limited thereto.

The following uses an example in which the notification message is CQE information to describe specific content of the notification message. For example, the notification message includes the following content:
1. DW0: Command specific (command specific): 0 (which is preconfigured by using interface parameters of a driver and the network interface card, where reference is made to the foregoing step 1004, and operating system differentiated preconfiguration is supported).
2. DW1: Command specific (command specific): 0 (which is preconfigured by using the interface parameters of the driver and the network interface card, where reference is made to the foregoing step 1004, and operating system differentiated preconfiguration is supported).
3. DW2: Submission queue identifier (submission queue identifier): The submission queue identifier is obtained by the network interface card by parsing the third command (for example, obtained by converting a sequence number based on a queue of a basic transmission header of the third command, where a specific conversion manner is not limited, and can be set based on a requirement). Submission queue head pointer (submission queue head pointer, SQHD): The submission queue head pointer is dynamically generated, and is, for example, 0. This application is not limited thereto.
4. DW3: Path status information: 0×360h (which is preconfigured by using the interface parameters of the driver and the network interface card, where reference is made to the foregoing step 1004, and operating system differentiated preconfiguration is supported). Command identifier: The command identifier is obtained by parsing the third command.

It should be understood that a function of the notification message is to notify the host that an anomaly occurs on a path on which the first node is located. Therefore, information other than the path status information in the notification message is optional information, and can be configured based on a requirement. This application is not limited to the content shown in the foregoing example.

1009: The network interface card in the storage device sends the notification message to the host, where the notification message indicates that an anomaly occurs on the path on which the first node is located.

The network interface card sends the notification message to the host through an application layer (application layer). For example, the notification message is a NVMe encapsulated packet. This application is not limited thereto.

1010: The host receives the notification message.

1011: The host accesses a storage based on the notification message through a path on which a node other than the first node in the plurality of nodes is located.

The foregoing step 1009 to step 1011 are similar to step 803 to step 805 in the embodiment shown in FIG. 8. Therefore, details are not described again.

In the node anomaly event processing method, the path status information is configured in the input/output queue context of the network interface card. In this way, the network interface card can send the notification message to the host when detecting an anomaly event related to the first node and receiving the third command delivered by the host, so that the host performs path switching. This process can effectively reduce a path switching delay of the host, and improve continuity and reliability of a storage service.

Based on embodiments shown in FIG. 9 and FIG. 10, two manners in which the network interface card sends the notification message to the host are described. It should be understood that embodiments shown in FIG. 9 and FIG. 10 may be combined. To be specific, when detecting an anomaly event related to the first node, the network interface card can actively report an AER completion event to the host, and can also return an I/O response to the host when receiving the third command. A specific process is similar to that in embodiments shown in FIG. 9 and FIG. 10. Therefore, details are not described again.

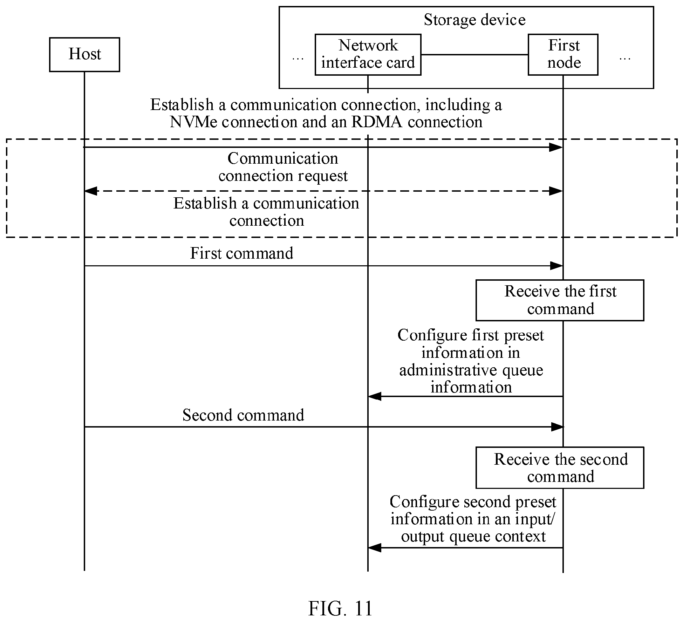

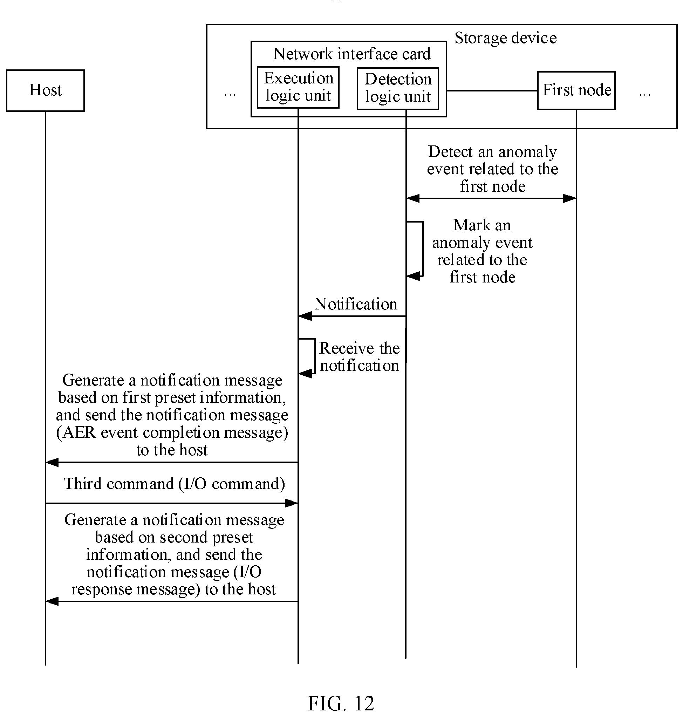

Refer to FIG. 11 and FIG. 12. The following describes, by using an example with reference to embodiments shown in FIG. 9 and FIG. 10, the node anomaly event processing method provided in this application.

FIG. 11 is a diagram of a node anomaly event processing method according to an embodiment of this application. As shown in FIG. 11, a host establishes a communication connection to a first node in a plurality of nodes in a storage device via a network interface card in the storage device, and creates an administrative queue and an input/output queue. The communication connection includes a NVMe connection and an RDMA connection. Then, the host delivers a first command to the first node by using the administrative queue. The first node receives the first command, parses the first command to obtain first preset information, invokes a preset interface provided by the network interface card, and configures the first preset information in administrative queue information (where for the first preset information, refer to the foregoing step 904). In addition, the host delivers a second command to the first node by using the administrative queue. A second node receives the second command, generates second preset information based on an indication of the second command and an operating system type of the host, invokes the preset interface provided by the network interface card, and configures the second preset information in an input/output queue context (where for the second preset information, refer to the foregoing step 1004). It should be noted that the procedure shown in FIG. 11 may be understood as an initialization procedure. The procedure shown in FIG. 11 is used, so that the network interface card in the storage device can notify the host of an anomaly event related to the first node. In addition, a sending sequence of the first command and the second command is not limited in this application.

FIG. 12 is a diagram of another node anomaly event processing method according to an embodiment of this application. As shown in FIG. 12, a fault reflector is deployed on a network interface card, and the fault reflector includes a detection logic unit and an execution logic unit. For example, the detection logic unit detects an anomaly event related to a first node, and when detecting an anomaly event related to the first node, notifies the execution logic unit that the related anomaly event occurs on the first node. In this process, the detection logic unit may further mark the anomaly event related to the first node, to avoid repeated processing of the anomaly event related to the first node. Then, the execution logic unit generates a notification message based on the notification of the detection logic unit and first preset information, and sends the notification message to a host. The notification message is an AER asynchronous event completion message (it should be noted that in some embodiments, the network interface card is communicatively connected to a plurality of hosts, the network interface card traverses all current administrative queues, and sends the notification message to the plurality of hosts connected to the network interface card, and this is not limited in this application). In addition, when receiving a third command (namely, an I/O command), the network interface card generates a notification message based on second preset information, and sends the notification message to the host. The notification message is an I/O response message.

In the foregoing manner, the fault reflector (a logic unit, including the detection logic unit and the execution logic unit) is deployed on the network interface card in a storage device, and the fault reflector and a node are separately deployed. Therefore, when an anomaly event related to the first node is detected, the fault reflector takes over a NVMe command, quickly returns a message to the host based on a preconfigured asynchronous event, and returns a specific error code for a newly received NVMe command, to quickly trigger path switching of the host, so as to effectively reduce a path switching delay of the host, implement second-level convergence of a normal path, and improve continuity and reliability of a storage service. Even in an extreme scenario, for example, there are M redundant paths (where M is a positive integer) for the host to access a storage of the storage device. If an anomaly event occurs on nodes corresponding to M-1 paths (for example, an entire power supply single plane of a cluster is faulty), through M-1 times of I/O path feedback and proactive reporting, the host can quickly converge, in seconds, to a node path that is for normal processing provided that one node is normal, and trigger second-level I/O switchover, to improve the continuity and the reliability of the storage service.

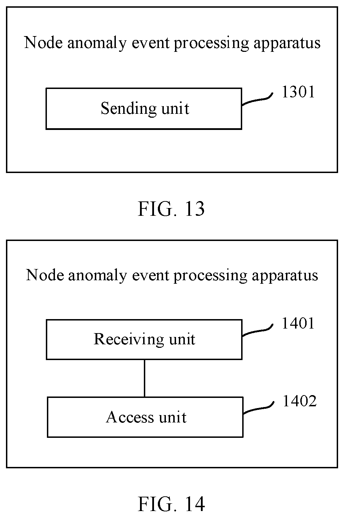

FIG. 13 is a diagram of a structure of a node anomaly event processing apparatus according to an embodiment of this application. The apparatus may implement, by using software, hardware, or a combination thereof, functions of the network interface card of the foregoing storage device. As shown in FIG. 13, the apparatus is configured on a network interface card in a storage device, the storage device includes the network interface card and a plurality of nodes, the network interface card is communicatively connected to a first node in the plurality of nodes, the node is configured to manage a storage, and the apparatus includes:
a sending unit 1301, configured to send a notification message to a host when an anomaly event related to the first node is detected, where the notification message indicates that an anomaly occurs on a path on which the first node is located, to enable the host to access the storage through a path on which a node other than the first node in the plurality of nodes is located.

In some embodiments, the notification message includes path status information, and the path status information indicates that an anomaly occurs on the path on which the first node is located.

In some embodiments, the network interface card is communicatively connected to the first node through a peripheral component interconnect express PCIe link.

In some embodiments, the apparatus further includes a detection unit, configured to:
perform link anomaly detection on the PCIe link to determine whether an anomaly event related to the first node occurs.

In some embodiments, the detection unit is configured to:
perform polling mechanism detection and/or interrupt detection mechanism detection on the PCIe link, and when an anomaly of the PCIe link is detected, determine that an anomaly event related to the first node occurs.

In some embodiments, the sending unit 1301 is configured to any one of the following:

The network interface card sends the notification message to the host through an application layer; and
the network interface card sends the notification message to the host through a transport layer.

In some embodiments, the apparatus further includes an obtaining unit, configured to:
obtain the path status information from administrative queue information of the network interface card, where the path status information in the administrative queue information is configured by the first node based on a first command delivered by the host, the first command carries the path status information, and the first command indicates to send the notification message to the host when an anomaly event related to the first node is detected.

In some embodiments, the obtaining unit is further configured to:
obtain the path status information from an input/output queue context of the network interface card, where the path status information in the input/output queue context is configured by the first node based on a second command delivered by the host, the second command indicates to generate the path status information based on an operating system type of the host, and configure the path status information in the input/output queue context.

In some embodiments, the apparatus further includes a receiving unit, configured to:
receive a third command delivered by the host, where the third command is a read command or a write command, and the third command indicates to send the notification message to the host when an anomaly event related to the first node is detected.

When detecting an anomaly event related to the first node, the apparatus can send the notification message to the host in a timely manner, to notify the host that an anomaly occurs on the path on which the first node is located, so that the host performs path switching. This manner can effectively reduce a path switching delay of the host, and improve continuity and reliability of a storage service.

It should be noted that, when the node anomaly event processing apparatus provided in the embodiment processes a node anomaly event, division of the foregoing functional modules is merely used as an example for description. During actual application, the foregoing functions may be allocated, based on a requirement, to different functional modules for implementation. In other words, an internal structure of the apparatus is divided into different functional modules to implement all or some of the functions described above. In addition, the node anomaly event processing apparatus provided in the embodiment and the node anomaly event processing method embodiments belong to a same concept. For a specific implementation process, refer to the method embodiments. Details are not described herein again.

FIG. 14 is a diagram of a structure of another node anomaly event processing apparatus according to an embodiment of this application. The apparatus may implement, by using software, hardware, or a combination thereof, functions of the host. As shown in FIG. 14, the apparatus is configured on a host, the host is communicatively connected to a network interface card in a storage device, the storage device includes the network interface card and a plurality of nodes, the network interface card is communicatively connected to a first node in the plurality of nodes, the node is configured to manage a storage, and the apparatus includes:
a receiving unit 1401, configured to receive a notification message sent by the network interface card when an anomaly event related to the first node is detected, where the notification message indicates that an anomaly occurs on a path on which the first node is located; and
an access unit 1402, configured to access the storage based on the notification message through a path on which a node other than the first node in the plurality of nodes is located.

In some embodiments, the notification message includes path status information, and the path status information indicates that an anomaly occurs on the path on which the first node is located.

In some embodiments, the receiving unit 1401 is configured to any one of the following:
receive the notification message through a transport layer; and
receive the notification message through an application layer.

In some embodiments, the apparatus further includes a sending unit, configured to:
deliver a first command to the first node, so that the first node configures, in administrative queue information, the path status information carried in the first command, where the first command indicates to send the notification message to the host when an anomaly event related to the first node is detected.

In some embodiments, the sending unit is further configured to:
deliver a second command to the first node, so that the first node generates the path status information based on an indication of the second command and an operating system type of the host, and configure the path status information in an input/output queue context.

In some embodiments, the sending unit is further configured to:
deliver a third command to the network interface card, where the third command is a read command or a write command, and the third command indicates to send the notification message to the host when an anomaly event related to the first node is detected.

The apparatus can receive the notification message sent by the network interface card in the storage device, to learn in a timely manner that an anomaly occurs on the path on which the first node is located, to perform path switching. This manner can effectively reduce a path switching delay of the host, and improve continuity and reliability of a storage service.

It should be noted that, when the node anomaly event processing apparatus provided in the embodiment processes a node anomaly event, division of the foregoing functional modules is merely used as an example for description. During actual application, the foregoing functions may be allocated, based on a requirement, to different functional modules for implementation. In other words, an internal structure of the apparatus is divided into different functional modules to implement all or some of the functions described above. In addition, the node anomaly event processing apparatus provided in the embodiment and the node anomaly event processing method embodiments belong to a same concept. For a specific implementation process, refer to the method embodiments. Details are not described herein again.

It should be noted that information (including but not limited to user equipment information, personal information of a user, and the like), data (including but not limited to data used for analysis, stored data, displayed data, and the like), and signals in this application are used under authorization by the user or full authorization by all parties, and capturing, use, and processing of related data need to conform to related laws, regulations, and standards of related countries and regions. For example, the preset information and the like in this application are all obtained in a case of full authorization.

The terms such as "first" and "second" in this application are used to distinguish between same or similar items with basically same roles and functions. It should be understood that there is no logical or timing dependency between "first", "second", and "nth", and neither a quantity nor an execution sequence is limited. It should also be understood that although the following descriptions use the terms such as "first" and "second" to describe various elements, these elements should not be limited by the terms. These terms are simply used to distinguish one element from another. For example, without departing from the scope of the various examples, the first node may be referred to as a second node, and similarly, the second node may be referred to as a first node. Both the first node and the second node may be nodes, and in some cases may be separate and different nodes.

The term "at least one" in this application means one or more, and the term "a plurality of" in this application means two or more. For example, a plurality of nodes means two or more nodes.

The foregoing descriptions are merely specific implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

All or some of the foregoing embodiments may be implemented by using software, hardware, firmware, or any combination thereof. When software is used to implement the embodiments, all or some of the embodiments may be implemented in a form of program structure information. The program structure information includes one or more program instructions. When the program instructions are loaded and executed on a computing device, the procedures or functions according to embodiments of this application are all or partially generated.

All or some of the steps in the foregoing embodiments may be implemented by hardware, or may be implemented by a program instructing relevant hardware. The program may be stored in a computer-readable storage medium. The storage medium may be a read-only memory, a magnetic disk, an optical disc, or the like.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A node anomaly event processing method, applied to a network interface card in a storage device, wherein the storage device comprises the network interface card and a plurality of nodes, the network interface card is communicatively connected to a first node in the plurality of nodes, the node is configured to manage a storage, and the method comprises:
when detecting an anomaly event related to the first node, sending, by the network interface card, a notification message to a host, wherein the notification message indicates that an anomaly occurs on a path on which the first node is located, to enable the host to access the storage through a path on which a node other than the first node in the plurality of nodes is located.

2. The method according to claim 1, wherein the notification message comprises path status information, and the path status information indicates that an anomaly occurs on the path on which the first node is located.

3. The method according to claim 1 or 2, wherein the network interface card is communicatively connected to the first node through a peripheral component interconnect express PCIe link.

4. The method according to claim 3, wherein the method further comprises:
performing link anomaly detection on the PCIe link to determine whether an anomaly event related to the first node occurs.

5. The method according to claim 4, wherein the performing link anomaly detection on the PCIe link comprises:
performing polling mechanism detection and/or interrupt detection mechanism detection on the PCIe link, and when an anomaly of the PCIe link is detected, determining that an anomaly event related to the first node occurs.

6. The method according to any one of claims 2 to 5, wherein the sending, by the network interface card, a notification message to a host comprises any one of the following:
sending, by the network interface card, the notification message to the host through a transport layer; or
sending, by the network interface card, the notification message to the host through an application layer.

7. The method according to any one of claims 2 to 6, wherein the method further comprises:
obtaining the path status information from administrative queue information of the network interface card, wherein the path status information in the administrative queue information is configured by the first node based on a first command delivered by the host, the first command carries the path status information, and the first command indicates to send the notification message to the host when an anomaly event related to the first node is detected.

8. The method according to any one of claims 2 to 6, wherein the method further comprises:
obtaining the path status information from an input/output queue context of the network interface card, wherein the path status information in the input/output queue context is configured by the first node based on a second command delivered by the host, the second command indicates to generate the path status information based on an operating system type of the host, and configure the path status information in the input/output queue context.

9. The method according to any one of claims 2 to 6 and 8, wherein the method further comprises:
receiving a third command delivered by the host, wherein the third command is a read command or a write command, and the third command indicates to send the notification message to the host when an anomaly event related to the first node is detected.

10. A node anomaly event processing method, applied to a host, wherein the host is communicatively connected to a network interface card in a storage device, the storage device comprises the network interface card and a plurality of nodes, the network interface card is communicatively connected to a first node in the plurality of nodes, the node is configured to manage a storage, and the method comprises:
receiving a notification message sent by the network interface card when an anomaly event related to the first node is detected, wherein the notification message indicates that an anomaly occurs on a path on which the first node is located; and
accessing the storage based on the notification message through a path on which a node other than the first node in the plurality of nodes is located.

11. A node anomaly event processing apparatus, wherein the apparatus is configured on a network interface card in a storage device, the storage device comprises the network interface card and a plurality of nodes, the network interface card is communicatively connected to a first node in the plurality of nodes, the node is configured to manage a storage, and the apparatus comprises:
a sending unit, configured to send a notification message to a host when an anomaly event related to the first node is detected, wherein the notification message indicates that an anomaly occurs on a path on which the first node is located, to enable the host to access the storage through a path on which a node other than the first node in the plurality of nodes is located.

12. A node anomaly event processing apparatus, wherein the apparatus is configured on a host, the host is communicatively connected to a network interface card in a storage device, the storage device comprises the network interface card and a plurality of nodes, the network interface card is communicatively connected to a first node in the plurality of nodes, the node is configured to manage a storage, and the apparatus comprises:
a receiving unit, configured to receive a notification message sent by the network interface card when an anomaly event related to the first node is detected, wherein the notification message indicates that an anomaly occurs on a path on which the first node is located; and
an access unit, configured to access the storage based on the notification message through a path on which a node other than the first node in the plurality of nodes is located.

13. A network interface card, wherein the network interface card is configured in a storage device, the network interface card comprises a processor, a storage, and an interface, the interface is configured to communicatively connect to a node in the storage device, the storage is configured to store at least one segment of program code, and the at least one segment of program code is loaded by the processor to implement the node anomaly event processing method according to any one of claims 1 to 9.

14. A storage cluster, wherein the storage cluster comprises a network interface card, a plurality of nodes, and a storage, the network interface card is communicatively connected to the node, the node is configured to manage the storage, and the network interface card is configured to perform the node anomaly event processing method according to any one of claims 1 to 9.

15. The storage cluster according to claim 14, wherein the storage cluster is a centralized storage device, the node is a storage controller, the network interface card is connected to the node through a system bus, and the storage is connected to the node through the system bus.

16. The storage cluster according to claim 14, wherein the storage cluster is a distributed storage system, the distributed storage system comprises a plurality of independent storage devices, and the storage devices are connected via a wired network or a wireless network to form a storage network, wherein
each storage device comprises the network interface card, the node, and the storage, the network interface card is connected to the node through a system bus, and the storage is connected to the node through the system bus; or
each storage device comprises the network interface card and the node, and the storage is communicatively connected to the node in each storage device.

17. A host, wherein the host comprises a processor and a storage, and the processor is configured to execute instructions stored in the storage, to enable the host to perform the node anomaly event processing method according to claim 10.

18. A computer-readable storage medium, wherein the computer-readable storage medium is configured to store at least one segment of program code, and the at least one segment of program code is used to perform the node anomaly event processing method according to any one of claims 1 to 9, or perform the node anomaly event processing method according to claim 10.

19. A computer program product, wherein when the computer program product runs on a storage device, the storage device is enabled to perform the node anomaly event processing method according to any one of claims 1 to 9, or when the computer program product runs on a host, the host is enabled to perform the node anomaly event processing method according to claim 10.
